# FASCICULE DE BREVET EUROPEEN

(11) **EP 2 831 019 B1**
(45) Date de publication et mention de la délivrance du brevet: **18.05.2016**
(21) Numéro de dépôt: 13716748.2
(22) Date de dépôt: 29.03.2013
(51) Int. Cl.: C07B 59/00, B01J 19/00

(54) **MODULE JETABLE POUR DISPOSITIF DE SYNTHÈSE DE RADIOISOTOPES ET PROCÉDÉ DE FABRICATION DUDIT MODULE**
EINWEGMODUL FÜR EINE VORRICHTUNG ZUR HERSTELLUNG VON RADIOISOTOPEN UND VERFAHREN ZUR HERSTELLUNG DES BESAGTEN MODULS
DISPOSABLE MODULE FOR DEVICE FOR SYNTHESIZING RADIOISOTOPES AND PROCESS FOR MANUFACTURING SAID MODULE

(30) Priorité: 30.03.2012 BE 201200220
(43) Date de publication de la demande: 04.02.2015
(73) Titulaire: ION BEAM APPLICATIONS S.A., 1348 Louvain-la-Neuve (BE)
(72) Inventeur: LAMBERT, Bernard, Leesburg Virginia 20176 (US); GUYETTE, Michel, 5002 Saint-Servais (BE); SAUVAGE, Christophe, 5300 Landenne (BE)
(74) Mandataire: Pronovem
(86) Numéro de dépôt international: PCT/EP2013/056841
(87) Numéro de publication internationale: WO 2013/144357

(56) Documents cités:
- US-B2- 7 235 216

## Description

### Domaine technique

La présente invention se rapporte à un module jetable pour dispositif de synthèse de radioisotopes et à un procédé de fabrication de ce dit module.

### Description de l'état de la technique

La tomographie par émission de positrons est une technique d'imagerie médicale permettant de visualiser l'activité métabolique d'un organe suite à l'injection d'un traceur radioactif dont on connait les propriétés biologiques dans cet organe. Un des traceurs les plus utilisés en médecine nucléaire est le 18F-fluoro-désoxy-D-glucose abrévié [18F]-FDG. Ce traceur semblable au glucose vient s'accumuler dans les tissus qui consomment de grandes quantités de sucre comme les cellules cancéreuses, le coeur ou le cerveau. La synthèse du [18-F]-FDG est décrite dans le document de Hamacher et al. J. Nucl. Med. 27, 235-238 (1986**).**

Plusieurs dispositifs de synthèse automatisés de traceurs radioactifs ont été mis au point. Un tel dispositif de synthèse est avantageusement disposé dans une cellule de blindage.

Un dispositif commercialisé par le demandeur sous le nom de Synthera® est décrit dans le document US7235216. Ce dispositif comprend un module fixe et un module jetable que l'on positionne sur le module fixe.

Le module fixe comprend un processeur et une interface pour le module jetable. L'interface du module fixe est munie d'actionneurs rotatifs et de connecteurs fluidiques sortant de l'interface et comprend une structure pour positionner de manière éjectable un module jetable sur ladite interface de telle sorte à ce que les actionneurs rotatifs et les connecteurs fluidiques puissent s'insérer dans le module jetable.

Le module jetable comprend :
- une interface apte à se positionner contre l'interface du module fixe ;
- des vannes à 2 voies et à 3 voies actionnables par lesdits actionneurs du module fixe ;
- des connecteurs fluidiques aptes à se connecter avec les connecteurs fluidiques du module fixe ;
- une plaque supportant des flacons de réactifs et un réacteur, chacun des flacons étant relié à une vanne par un tuyau flexible et plusieurs vannes étant reliées audit réacteur par un tuyau flexible.

Le processeur du module fixe contrôle les débits de fluide ainsi que l'ouverture et la fermeture des vannes de sorte à effectuer les différentes étapes de réaction de synthèse du traceur radiopharmaceutique. Une fois le produit radiopharmaceutique obtenu, celui-ci est transféré dans un récipient en passant par des cartouches de purification. Avantageusement, la Synthera® est disposée dans une cellule de blindage comprenant un conteneur muni d'une trappe située à l'avant du module fixe et sous le module jetable, de sorte à pouvoir recueillir le module jetable lorsque celui-ci est éjecté à la fin de la synthèse.

La Synthera® est relativement compacte, et plusieurs Synthera® peuvent être insérées dans une même cellule de blindage. La Synthera® a pour avantage de ne pas nécessiter d'intervention humaine pour enlever le module jetable une fois la synthèse du traceur radiopharmaceutique terminée. Néanmoins, le module jetable d'un tel dispositif nécessite un assemblage particulier de tubes flexibles. Ces tubes flexibles sont assemblés manuellement sur la plaque et le client doit vérifier que chacun des tubes est bien fixé. Des erreurs humaines lors du positionnement des tubes sont toujours possibles.

De plus, l'aire de la plaque de support est relativement compacte (14x5cm) et comprend des emplacements réservés pour flacons de réactifs ainsi que pour des cartouches de purification, laissant peu de place pour le positionnement des moyens de connexion fluidique pour les tubes. Certains tubes peuvent avoir des extrémités rapprochées et subir certaines contraintes de tension pouvant provoquer un délogement du tube. Certains tubes peuvent également se plier lors de l'assemblage et provoquer un mauvais écoulement du liquide.

Les flacons de réactifs sont scellés par un septum en caoutchouc et maintenus sur la plaque de support par des moyens de fixation. La plaque de support comprend un support mobile sur lequel sont disposées des aiguilles métalliques connectées aux tubes flexibles, chacune des aiguilles étant disposée sous un flacon de réactifs. Avant la synthèse, le support mobile est actionné de sorte à insérer les aiguilles dans le septum des flacons de réactifs. Afin de permettre une bonne insertion des aiguilles dans les flacons, les septums des flacons ont une épaisseur réduite, ce qui peut parfois causer une évaporation de certains solvants volatils. Aussi, lorsque le support mobile est actionné, il arrive que des flacons se délogent de leur moyen de fixation.

Des dispositifs microfluidiques pour la synthèse de produits radiopharmaceutiques ont été conçus dans le but de produire des quantités plus faibles de produits radiopharmaceutiques, pour des applications en recherche scientifique. Ces dispositifs permettent la manipulation de microlitres de solutions concentrées en réactifs pour des productions de produits radiopharmaceutiques dont l'activité ne dépasse pas les 100 mCi. Un tel dispositif est décrit dans le document WO2007041486. Ce dispositif est destiné à produire de faibles doses de produits radiopharmaceutiques et comprend une plaque de 20x20x4mm, 25x25x5mm, 7x7x3mm ou 30x30x6mm dans laquelle est intégrée :
- un réseau de canaux microfluidiques, c'est-à-dire un réseau de canaux de section transversale au moins inférieure à 1mm et ;
- un réacteur cylindrique dont le rapport du diamètre sur la hauteur est supérieur à 3, la hauteur étant comprise entre 25 et 1000µm, le diamètre étant compris entre 1 et 20 mm.

Ce dispositif comprend des vannes disposées à proximité des entrées et sorties du réacteur. Pour la production de 18FDG, le réacteur est chauffé à des températures allant de 60 à 75°. Des surpressions peuvent survenir dans le réacteur pendant la réaction, du au petit volume du réacteur et à la nécessité de fermer toutes les vannes pour maintenir le liquide dans le réacteur, ce qui peut provoquer des fuites au niveau d'une ou plusieurs vannes du réacteur. Pour éviter des pertes de liquides, des vannes supplémentaires ou des doubles vannes doivent être utilisées, ce qui complique la réalisation du dispositif. D'autre part, le réacteur est inclus dans la plaque, sa hauteur est de l'ordre du diamètre des canaux microfluidiques et se situe dans un même plan avec les canaux microfluidiques. Les entrées et sorties du réacteur sont situées sur la portion cylindrique du réacteur. La disposition du réacteur et des canaux microfluidiques dans la plaque ainsi que les dimensions du réacteur ne permettent pas une bonne homogénéisation du mélange réactionnel. Plusieurs solutions à ce problème sont proposées dans le document WO2007041486, néanmoins, celles-ci compliquent la réalisation de la plaque.

Il y a donc un besoin de concevoir un module jetable ne présentant pas les inconvénients des dispositifs précités. De manière avantageuse, un tel module jetable devrait pouvoir être inséré sur des modules fixes existants.

Il est également nécessaire de réaliser un procédé de fabrication de modules jetables qui soit plus rapide et plus fiable.

### Résumé de l'invention

La présente invention concerne un module jetable pour utilisation dans un dispositif de synthèse de produits radiopharmaceutiques au départ de réactifs chimiques selon l'une quelconque des revendications attachées. En particulier, il s'agit d'un module jetable comprenant :
- une plaque de support comprenant des moyens rigides de connexion à au moins un flacon de réactifs chimiques en solution dans un solvant, et un réacteur;
- des moyens d'interface avec un module fixe dudit dispositif de synthèse, en contact avec ou intégrés dans ladite plaque de support, lesdits moyens d'interface comprenant au moins une vanne et/ou au moins une entrée de fluide et/ou au moins une sortie de fluides;
- au moins un conduit connecté auxdites au moins une vanne ou auxdites au moins une entrée de fluide ou auxdites au moins une sortie de fluide,
caractérisé en ce que au moins un desdits conduits est intégré dans le corps du module jetable.

Dans une forme d'exécution préférée du module, les moyens d'interface se présentent comme (i.e. consistent en) : une plaque d'interface comprenant lesdites au moins une vanne, lesdites au moins une entrée de fluide et lesdites au moins une sortie de fluides et en contact avec ladite plaque de support, caractérisé en ce que au moins un desdits conduits est intégré dans ladite plaque de support et/ou dans ladite plaque d'interface.

De préférence la totalité desdits conduits sont intégrés dans le corps du module jetable, ou - dans le cas de la forme selon le paragraphe précédent - dans ladite plaque de support et/ou dans ladite plaque d'interface.

Selon une forme d'exécution, la connexion entre la plaque de support et la plaque d'interface est effectuée par des ailes latérales solidaires avec la plaque de support, et attachées à la plaque d'interface par des clips. L'intégration de conduits dans la plaque de support et/ou dans la plaque d'interface permet en particulier d'éviter l'utilisation de tuyau souple pour connecter les flacons, le réacteur, les entrées de fluide et les sorties de fluide avec les vannes ce qui réduit considérablement les risques de confusion, d'erreurs lors du montage du module, les risque de fuites et de débranchements des tubes. Avantageusement, lesdits moyens rigides de connexion se présentent sous la forme d'au moins une aiguille moulée avec la plaque de support, les flacons à connecter étant fermés au moyen d'un septum.

Selon des modes préférés de l'invention, le module jetable comporte au moins une, ou une combinaison quelconque appropriée des caractéristiques suivantes :
- les moyens rigides de connexion sont moulés avec ladite plaque de support, ou ladite plaque de support est surmoulée sur au moins une aiguille métallique ;
- le module jetable comprend ledit au moins un flacon de réactifs chimiques en solution dans un solvant ;
- le module jetable comprend :
   - des conduits arrangés de sorte à permettre le transfert desdits réactifs chimiques vers ledit réacteur ;
   - un conduit arrangé de sorte à permettre l'introduction d'un flux de gaz dans ledit réacteur ;
   - un conduit arrangé de sorte à faire le vide dans le réacteur ;
   - un conduit arrangé pour permettre l'évacuation du produit obtenu dans ledit réacteur ;
- ladite plaque de support comprend des moyens de fixation pour ledit au moins un flacon ;
- ledit réacteur est en un matériau plastique inerte chimiquement en présence de solutions rencontrées dans la synthèse de produits radiopharmaceutiques et thermorésistant à des températures supérieures à 150°C, de préférence ledit matériau plastique est un copolymère ethylène-norborène dont la température de transition vitreuse est supérieure à 150°C.

Un autre aspect de l'invention concerne un procédé de fabrication d'un module jetable pour utilisation dans un dispositif de synthèse de produits radiopharmaceutiques, ledit procédé comprenant une étape d'assemblage (collage) d'un film, d'une feuille ou d'une plaque sur une plaque de module jetable substantiellement plane et munie de rainures, de sorte à recouvrir hermétiquement lesdites rainures pour former des conduits ou des parties de conduits aptes à transférer des réactifs chimiques, des gaz ou des produits.

Avantageusement, le procédé de l'invention comprend les étapes suivantes :
i) collage d'un film, d'une feuille ou d'une plaque sur une plaque de support comprenant :
   ▪ une première face munie de rainures et de premiers moyens de connexion fluidiques connectés auxdites rainures ;
   ▪ une face perpendiculaire à ladite première face, ladite face perpendiculaire comprenant des seconds moyens de connexion fluidique en communication avec lesdites rainures,
   de sorte à recouvrir hermétiquement lesdites rainures ;
ii) collage d'un film, d'une feuille ou d'une plaque sur une plaque d'interface comprenant :
   ▪ une face munie de rainures et ;
   ▪ des moyens de connexions fluidiques disposés de telle sorte à pouvoir se connecter auxdits seconds moyens de connexion fluidique de ladite plaque de support ;
   de sorte à recouvrir lesdites rainures de ladite plaque d'interface;
iii) assemblage hermétique de ladite plaque de support avec ladite plaque d'interface, de sorte à connecter lesdits moyens de connexion fluidique de ladite plaque d'interface avec lesdits seconds moyens de connexion fluidique de ladite plaque de support.

De préférence, ladite étape d'assemblage hermétique s'effectue en insérant un joint entre ladite plaque de support et ladite plaque d'interface.

Selon une autre forme préférée de l'invention, le procédé comprend les étapes suivantes :
i) gaufrage d'une première plaque comprenant :
   ▪ une première face munie de rainures et de premiers moyens de connexion fluidique connectées auxdites rainures ;
   ▪ une face perpendiculaire à ladite première face, ladite face perpendiculaire comprenant des seconds moyens de connexion fluidique en communication avec lesdites rainures,
   et d'une seconde plaque comprenant :
   ▪ une première face munie de rainures et de premiers moyens de connexion fluidique connectées auxdites rainures ;
   ▪ une face perpendiculaire à ladite première face ladite face perpendiculaire comprenant des seconds moyens de connexion fluidique en communication avec lesdites rainures,
   de sorte à former une plaque de support, ladite première face de ladite première plaque étant mise en contact avec ladite première face de ladite seconde plaque, lesdites rainures de ladite première plaque et de ladite seconde plaque étant disposées de sorte à ne pas entrer en contact les unes avec les autres ;
ii) collage d'un film, d'une feuille ou d'une plaque sur une plaque d'interface comprenant :
   ▪ une face munie de rainures et ;
   ▪ des moyens de connexions fluidiques disposés de telle sorte à pouvoir se connecter auxdits seconds moyens de connexion fluidique de ladite plaque de support ;
   de sorte à recouvrir lesdites rainures de ladite plaque d'interface;
iii) assemblage hermétique de ladite plaque de support avec ladite plaque d'interface, de sorte à connecter lesdits moyens de connexion fluidique de ladite plaque d'interface avec lesdits seconds moyens de connexion fluidique de ladite plaque de support. Avantageusement ladite plaque de support et ladite plaque d'interface sont en copolymère ethylène-norborène dont la température de transition vitreuse est supérieure à 150°C et en ce que lesdits films, feuilles ou plaques recouvrant lesdites rainures sont en polypropylène.

Un troisième aspect de l'invention concerne un dispositif de synthèse de produits radiopharmaceutiques caractérisé en ce qu'il comprend un module jetable selon invention. Avantageusement, le module jetable de l'invention est fabriqué à l'aide du procédé de l'invention.

### Brève description des dessins

- Fig.1: montre une vue du module jetable selon la présente invention;
- Fig.2: montre une vue de la partie supérieure du module jetable selon la présente invention;
- Fig.3: montre une vue de la partie inférieure du module jetable selon la présente invention;
- Fig. 4: montre une vue de l'arrière de la plaque d'interface du module jetable selon la présente invention.
- Fig. 5: montre une vue d'un dispositif de synthèse comprenant le module jetable selon la présente invention
- Fig. 6: montre une vue de la partie supérieure du module jetable selon un second mode de réalisation de l'invention.
- Fig. 7: montre une vue d'une plaque de support et d'une plaque d'interface d'un module jetable selon un troisième mode de réalisation de la présente invention.
- Fig. 8: montre un schéma d'un premier mode de réalisation d'un procédé de fabrication d'un module jetable selon la présente invention.
- Fig. 9: montre un schéma d'un second mode de réalisation d'un procédé de fabrication d'un module jetable selon la présente invention.
- Fig. 10: montre une vue globale d'un module jetable selon la présente invention.
- Fig. 11: montre les parties de la plaque de support du module montré à la Fig. 10.
- Fig. 12: montre une autre vue de la plaque de support du module montré à la Fig. 10.
- Fig. 13: montre les parties de la plaque d'interface du module montré à la Fig. 10.

Les figures ne sont pas dessinées à l'échelle.

### Description détaillée de l'invention

La présente invention a été décrite en terme de modes de réalisation spécifiques qui sont illustratifs de l'invention et qui ne doivent pas être interprétés de manière limitative. Plus généralement, il sera apprécié par l'homme du métier que la présente invention n'est pas limitée par ce qui a été particulièrement représenté et/ou décrit ci-dessous.

L'utilisation des verbes « comprendre », « inclure », « être composé de », « être muni de », ou de toute autre variante, ainsi que leur conjugaisons respectives, n'exclut pas la présence d'éléments autres que ceux indiqués. L'utilisation de l'article « un », « une », « le » ou « la » précédent un élément n'exclut pas la présence d'une pluralité de tels éléments.

Selon un premier aspect, la présente invention se rapporte à un module jetable 100 pour un dispositif macrofluidique de synthèse automatisée de traceur radioactif.

Préférablement, le module jetable comprend :
- au moins un flacon de réactifs chimiques 102, 103, 104, 105 en solution dans un solvant ;
- un réacteur 106 ;
- des moyens de transfert de fluide comprenant un conduit et une vanne pour ouvrir ou fermer ledit conduit et ;
- une plaque de support 101 supportant ledit réacteur 106 et ledit au moins un flacon.

On définit un dispositif macrofluidique de synthèse comme un dispositif de synthèse dont au moins le réacteur peut contenir des volumes de liquides supérieurs à 1 ml. Préférablement, les flacons de réactifs sont également aptes à contenir des volumes de liquides supérieurs à 1ml. Encore plus préférablement, la section des conduits est supérieure à 1mm de diamètre.

Le module jetable 100 est caractérisé en ce que au moins un conduit est intégrée dans le corps du module jetable 100. De préférence, l'entièreté de tous les conduits est intégrée dans le corps du module jetable.

On supprime ainsi l'usage de tuyaux flexibles comme moyens de transfert de fluides.

Préférablement, le corps dudit module jetable 100 est formé par ladite plaque de support 101 et par une seconde plaque d'interface 115 perpendiculaire à ladite plaque de support 101.

Préférablement, ladite plaque de support 101 est fixée contre la plaque d'interface 115 par un moyen de fixation. Préférablement, un joint d'étanchéité est compris entre ladite plaque de support et ladite plaque d'interface 115. Préférablement, le module jetable 100 comprend :
- des premiers moyens de transfert de fluides étant arrangés de sorte à permettre le transfert desdits réactifs chimiques dudit flacon vers ledit réacteur ;
- un second moyen de transfert de fluide étant arrangé de sorte à permettre l'introduction d'un flux de gaz dans ledit réacteur et ;
- un troisième moyen de transfert de fluide étant arrangé de sorte à permettre l'évacuation du produit obtenu dans ledit réacteur.

Préférablement, ladite plaque de support 101 comprend des moyens d'attache 107 pour le au moins un dit flacon. Préférablement, ladite plaque de support 101 comprend des moyens de connexion fluidique 114 pour les flacons de réactifs et des moyens de connexion fluidique 114' pour le réacteur.

Préférablement, ledit au moins un flacon de réactifs est scellé par un septum en caoutchouc et lesdits premiers moyens de transfert de fluides comprennent un moyen de connexion fluidique pointu 114 apte à transpercer ledit septum, ledit moyen de connexion fluidique étant en une matière plastique moulé avec ladite plaque de support. Les flacons peuvent ainsi être fixés à la main avec la pression requise, ce qui permet de sceller les flacons avec des septums plus épais et d'éviter d'éventuelles évaporations de liquide. Par cette configuration, on évite également les problèmes de délogement des flacons de leurs moyens de fixation.

Préférablement, la plaque de support 101 comprend un tube plongeant 108 dans ledit réacteur, ledit tube plongeant 108 étant connecté audit troisième moyen de transfert de fluide pour évacuer le produit de la réaction.

Préférablement, le tube plongeant est moulé contre la paroi du réacteur.

Préférablement, une partie dudit module jetable 100 est réalisé en polypropylène de qualité médicale (par exemple commercialisé sous le nom de ...) et une autre partie dudit module jetable est réalisée en un copolymère ethylène-norborène commercialisé sous le nom de Topas ®. Ces matériaux sont approuvés par la FDA (Food and Drugs Administration) pour la réalisation de dispositifs de production de radiopharmaceutiques.

Selon un premier mode de réalisation de l'invention, ledit réacteur 106 est fixé sur la plaque de support par un moyen de fixation. Selon un second mode de réalisation de l'invention, le réacteur est soudé contre le corps de la plaque de support 101. Selon un troisième mode de réalisation de l'invention, une première partie du réacteur est moulée avec la plaque de support 101 et une seconde partie du réacteur est soudée contre la première partie du réacteur. Le réacteur 106 est préférablement réalisé en un matériau plastique transparent à la lumière visible et inerte chimiquement en présence des solutions rencontrées dans la synthèse des produits radiopharmaceutiques comme par exemple des solutions comprenant de l'acétonitrile, des acides ou des bases, et thermorésistant à des températures supérieures à 150°C.

Préférablement le réacteur est en copolymère ethylène-norbornène dont la température de transition vitreuse est supérieure à 150°C. De tels copolymères sont commercialisés par la firme TOPAS Advanced Polymers Gmbh, sous les noms de série 6015 et 6017 ayant respectivement une température de transition vitreuse de 160°C et 178°C, la température de transition vitreuse du copolymère étliylène-norbornène étant proportionnelle au taux de norbornène dans le copolymère. Ce matériau présente comme avantage de ne pas comporter de Silicium ni d'autre métaux comme l'aluminium ou le bore, qui à l'état de traces peuvent influer sur le rendement de la réaction de substitution nucléophile comme cela est décrit dans le document WO2011084763.

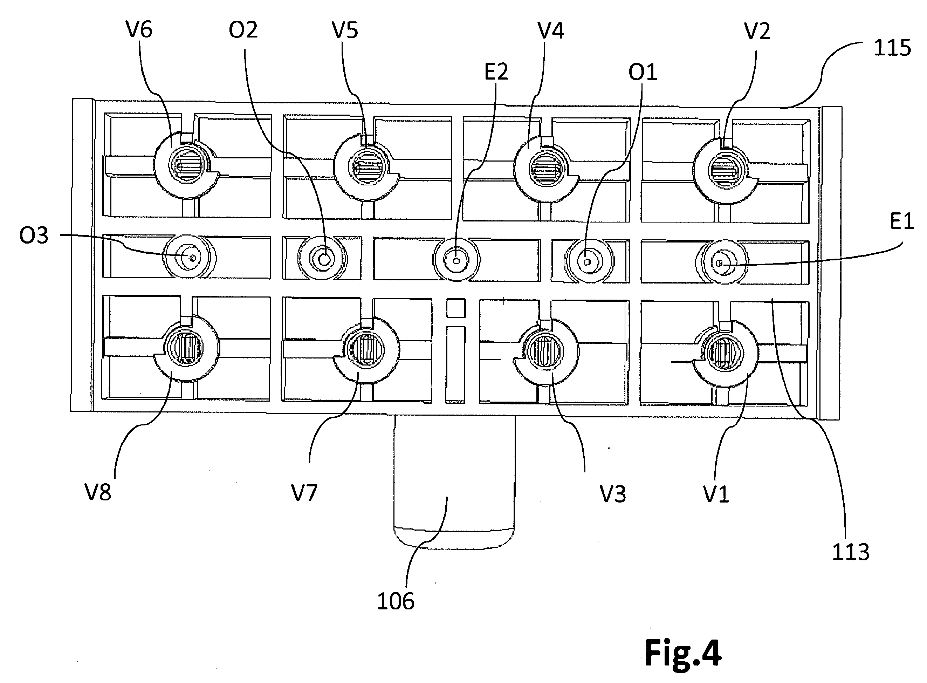

Préférablement, la plaque d'interface 115 du module jetable 100 comprend une interface 113 (Fig. 4) de connexion à un module fixe 200 d'un dispositif de synthèse 300 de produits radiopharmaceutiques comme par exemple le module fixe d'une Synthera® commercialisée par le demandeur et décrite plus en détail dans le document US7235216 incorporé par référence. Préférablement, ladite interface 113 comprend des entrées et des sorties de fluides.

### Premier exemple de réalisation de l'invention :

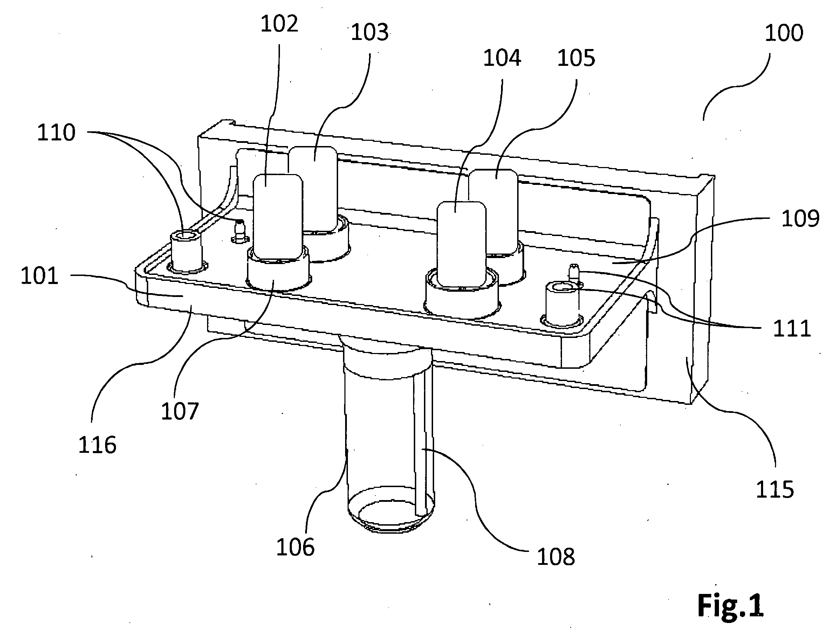

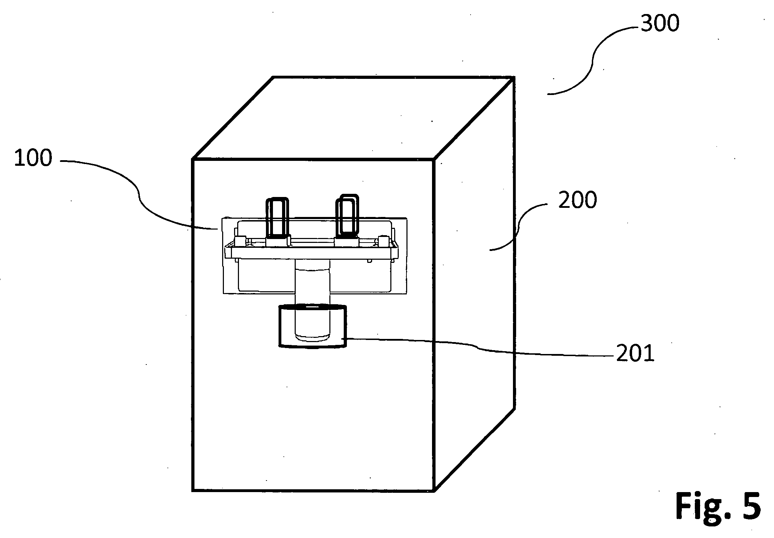

Les figures 1 à 5 sont relatives à un exemple non limitatif de module jetable destiné à la synthèse de 18F-fluorodésoxyglucose (18[F]-FDG). La synthèse de 18[F]-FDG ne constitue pas une limitation de l'utilisation du module jetable, d'autres traceurs radiopharmaceutiques pouvant être synthétisés en adaptant le module jetable, par exemple, en changeant la disposition des moyens de transferts, le nombre et le contenu des flacons de réactifs chimiques.

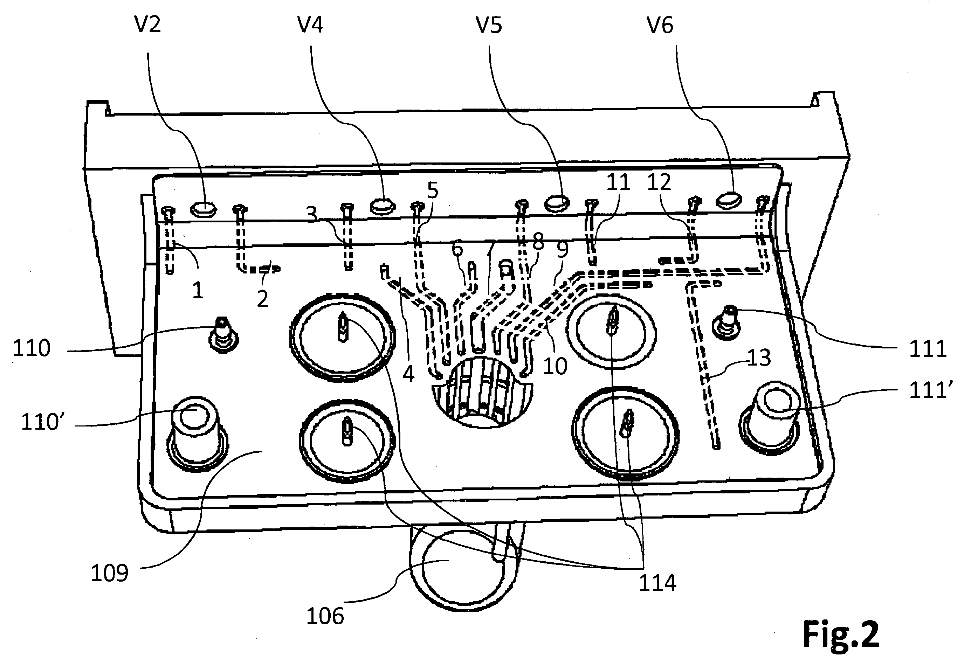

Selon un mode particulier de la présente invention, le corps du module jetable .100 comprend une plaque de support 101 et une seconde plaque d'interface 115 substantiellement perpendiculaire à ladite plaque de support 101, comme représenté sur les figures 1 à 3. La plaque de support 101 comprend une première face 109, représentée sur les figures 1 et 2, comprenant :
- un premier flacon de réactif 102 comprenant une solution dans de l'acétonitrile de 4,7,13,16,21,24-Hexaoxa-1,10-diazabicyclo[8.8.8]hexacosane plus connu sous le nom de Kryptofix 2.2.2.;
- un second flacon de réactifs 103 comprenant une solution dans l'acétonitrile de β-D-Mannopyranose 1,3,4,6-tetra-*O*-acetate 2-*O*-trifluoromethanesulfonate, 1,3,4,6-Tetra-*O*-acetyl-2-*O*-trifluoromethanesulfonyl-β-D-mannopyranose, plus connu sous le nom de mannose triflate,;
- un troisième flacon de réactifs 105 comprenant du NaOH en solution dans l'eau ;
- un quatrième flacon 104 contenant de l'eau.

Les flacons 102, 103, 104 et 105 sont préférablement scellés par un septum en caoutchouc. La première face 109 comprend également des moyens de connexion fluidique 114, par exemple des aiguilles aptes à percer le septum desdits flacons. La première face 109 comprend également des premiers moyens de connexions fluidiques d'entrée 110 et de sortie 110' pour une cartouche d'extraction de F-18 contenant une résine échangeuse d'anions, préférablement une cartouche QMA Waters (non représentée pour des raisons de clarté du dessin), et des seconds moyens de connexion fluidiques d'entrée 111 et de sortie 111' pour cartouche de purification de 18F-FDG (non représentée pour des raisons de clarté du dessin).

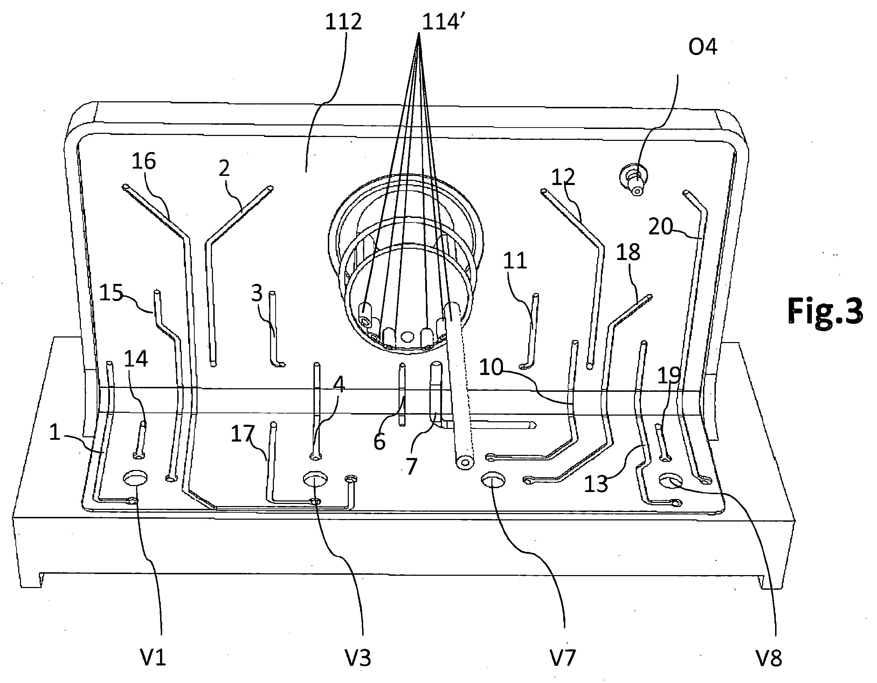

La plaque de support 101 comprend une seconde face 112, représentée sur la fig. 3, sur laquelle est fixé un réacteur 106 (non représenté sur la figure 3 pour raisons de clarté du dessin), soit via un moyen de fixation soit par une soudure ou soit par moulage avec la plaque ou via tout autre procédé de fixation. La seconde face 112 comprend en outre une sortie 04 de liquide pour l'évacuation de 18F-FDG obtenu à la fin de la synthèse.

La plaque d'interface 115 comprend une face avant 116 supportant ladite plaque de support 101 et une face arrière 113 servant d'interface pour la fixation du module jetable 100 sur un module fixe tel que décrit par exemple dans le document US7235216.

La figure 2 représente une vue du module jetable 100 axée sur ladite première face 109 de la plaque de support et une partie de la face avant 116 de la plaque d'interface 115.

Des vannes à deux voies V2, V4, V5 et V6 sont situées dans une portion supérieure de la plaque d'interface 115.

La figure 3 représente une vue du module jetable axée sur la seconde face 112 de la plaque de support et une partie inférieure de la plaque d'interface 115. Des vannes à trois voies V1, V3, V7, V8 sont situées dans une portion inférieure de la plaque d'interface 115.

La figure 4 représente une vue arrière du module jetable, et plus particulièrement de la partie arrière 113 de la plaque d'interface 115, servant d'interface avec un module fixe.

La partie arrière 113 de la plaque d'interface 115 comprend :
- une entrée E1 pour le fluide sortant d'une cible de production de radioisotopes, le fluide étant généralement de l'eau enrichie en 0-18 contenant du F-18 ;
- une première sortie O1 de liquide pour l'évacuation d'eau enrichie en 0-18 ;
- une entrée E2 de gaz inerte comme par exemple de l'Hélium ;
- une sortie 02 pour faire le vide
- une sortie 03 pour l'évacuation de déchets provenant de la réaction.

La fig. 4 présente également la partie arrière des vannes V1, V2, V3, V4, V5, V6, V7 et V8, inclues dans la plaque d'interface 115, chacune de ces vannes comprenant un logement pour des actuateurs de vannes d'un module fixe 200.

Le module jetable comprend une pluralité de canaux entièrement intégrés dans le corps du module jetable :
- un premier canal 14 connectant l'entrée E1 à la vanne V1 ;
- un second canal 1 traversant la plaque de support et connectant la vanne V1 à la vanne V2 ;
- un troisième canal 2 connectant le premier flacon de réactif 102 contenant le kryptofix à la vanne V2
- un quatrième canal 15 connectant la vanne V1 au moyen de connexion fluidique d'entrée 110 de la cartouche de capture de 18F ;
- un cinquième canal 16 connectant le moyen de connexion fluidique de sortie 110' de la cartouche de capture de 18F à la vanne V3 ;
- un sixième canal 17 connectant la vanne V3 à la sortie O1 ;
- un septième canal 4 connectant la vanne V3 au réacteur 106 ;
- un huitième canal 3 connectant le second flacon de réactifs 103 contenant le mannose triflate à la vanne V4 ;
- un neuvième canal 5 connectant la vanne V4 au réacteur 106 ;
- un dixième canal 6 connectant l'entrée E2 de gaz au réacteur 106 ;
- un onzième canal 7 connectant le réacteur 106 à la sortie 02 pour le vide ;
- un douzième canal 11 connectant le troisième flacon 105 contenant du NaOH à la vanne V5 ;
- un treizième canal 8 connectant la vanne V5 au réacteur 106 ;
- un quatorzième canal 12 connectant le quatrième flacon 104 contenant de l'eau à la vanne V6 ;
- un quinzième canal 9 connectant la vanne V6 au réacteur 106 ;
- un seizième canal 10 connectant le tube plongeant 108 dans le réacteur 106 à la vanne V7 ;
- un dix-septième canal 18 connectant la vanne V7 au moyen de connexion fluidique d'entrée 111 de la cartouche de purification de FDG ;
- un dix-huitième canal 20 connectant le moyen de connexion fluidique de sortie 111' de la cartouche de purification de FDG à la vanne V8 ;
- un dix-neuvième canal 19 connectant la vanne V8 à la sortie 03 pour l'évacuation des déchets provenant de la réaction et ;
- un vingtième canal 13 connectant la vanne V8 à la sortie 04 pour l'évacuation du FDG.

### Deuxième exemple de réalisation de l'invention :

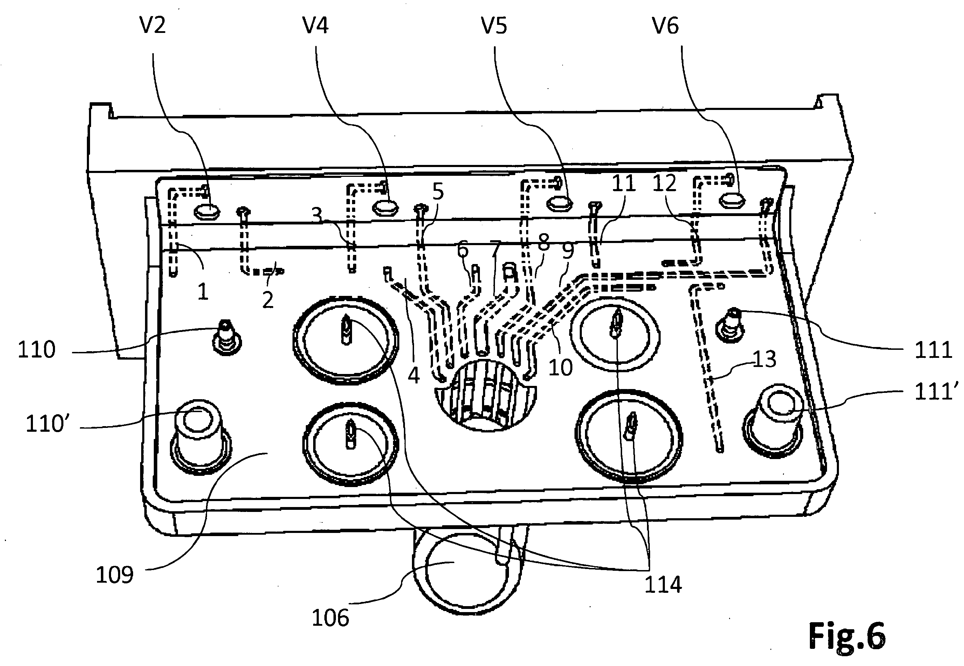

La figure 6 présente un second exemple de réalisation de l'invention comprenant toutes les caractéristiques du premier exemple et dans lequel :
- la connexion entre le deuxième canal 1 forme un angle de 90° avec la vanne V2 et la connexion entre la vanne V2 et le troisième canal 2 ;
- la connexion entre le huitième canal 3 forme un angle de 90° avec la vanne V4 et la connexion entre la vanne V4 et le neuvième canal 5 ;
- la connexion avec le douzième canal 11 forme un angle de 90° avec la vanne V5 et la connexion entre la vanne V5 et le treizième canal 8 et ;
- la connexion entre le quinzième canal 9 forme un angle de 90° avec la vanne V6 et la connexion entre la vanne V6 et le quatorzième canal 12.

Les vannes V2, V4, V5 et V6 sont dans ce cas des vannes à trois voies. Toutes les vannes du module jetable sont ainsi des vannes à trois voies, ce qui rend le module jetable plus facile et moins couteux à fabriquer.

### Troisième exemple de réalisation de l'invention :

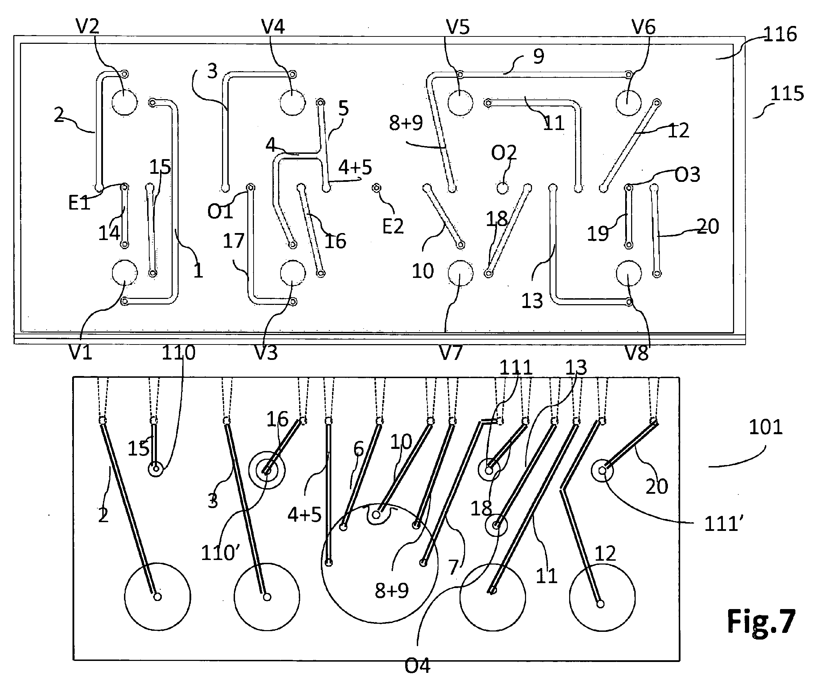

La figure 7 présente un troisième exemple de réalisation de l'invention comprenant toutes les caractéristiques du premier et du second exemple mais dans lequel le réseau de canaux est modifié de telle sorte à éviter que les canaux se croisent dans la plaque de support 101.

Aussi, la plaque d'interface 115 est modifiée de sorte à ce que les canaux 4 et 5 se rejoignent pour former un canal commun 4+5, et de sorte à ce que le canal 9 rejoigne le canal 8 pour former un canal commun 8+9. Cette jonction de canaux d'entrée de réactifs permet de diminuer le nombre de canaux dirigés vers le réacteur 106, ce qui simplifie la plaque de support 101.

Selon un second aspect, la présente invention se rapporte à un procédé de fabrication d'un module jetable 100 pour un dispositif macrofluidique de synthèse automatisée de traceur radioactif tel que décrit plus haut. Le procédé comprend une étape d'assemblage (par collage ou soudure par exemple) d'un film, d'une feuille ou d'une plaque sur une plaque de module jetable substantiellement plane et munie de rainures, de sorte à recouvrir hermétiquement au moyen d'un film ou d'une plaque lesdites rainures pour former des conduits ou des parties de conduits aptes à transférer des réactifs chimiques, des gaz ou des produits.

Selon un premier mode de réalisation du procédé, le procédé de fabrication du module jetable est réalisé de la manière suivante :
Dans une première étape, un film, une feuille ou une plaque 400 est assemblé sur une plaque de support 101 comprenant :
   ▪ une première face munie de rainures et de premiers moyens de connexion fluidiques connectés auxdites rainures ;
   ▪ une face perpendiculaire à ladite première face, ladite face perpendiculaire comprenant des seconds moyens de connexion fluidique en communication avec lesdites rainures,
   de sorte à recouvrir hermétiquement lesdites rainures.

Dans une seconde étape, un autre film, une autre feuille ou une autre plaque 400' est assemblée sur une plaque d'interface 115 comprenant :
   ▪ une face 116 munie de rainures et ;
   ▪ des moyens de connexions fluidiques disposés de telle sorte à pouvoir se connecter auxdits seconds moyens de connexion fluidique de ladite plaque de support ;
   de sorte à recouvrir hermétiquement lesdites rainures de la plaque d'interface.

Le film, feuille ou plaque 400' assemblé sur la plaque d'interface 115 est soit préalablement troué, soit percé après collage de sorte à ce que chacun des moyens de connexion fluidiques soit désobstrué.

Préférablement, le collage des films, feuille ou plaque sur ladite plaque de support et sur ladite plaque d'interface s'effectue au moyen d'un procédé de soudure thermique sans solvants, par exemple un procédé de soudure laser, un procédé de chauffage-par ultrasons ou un procédé utilisant des lames chauffantes.

Dans une troisième étape, la plaque de support 101 est assemblée avec ladite plaque d'interface 115, de sorte à connecter lesdits moyens de connexion fluidique de ladite plaque d'interface 115 avec lesdits seconds moyens de connexion fluidique de ladite plaque de support 101. Préférablement, un joint 401 est inséré entre la plaque de support 101 et la plaque d'interface 115 lors de l'étape d'assemblage.

Préférablement, la plaque d'interface 115 comprend un moyen de fixation 403 dans lequel vient se clipser la plaque de support 101 ou inversement. La plaque d'interface 115 comprend également des emplacements pour des vannes disposées sur la face opposée 113 à la face 116 munie de rainures.

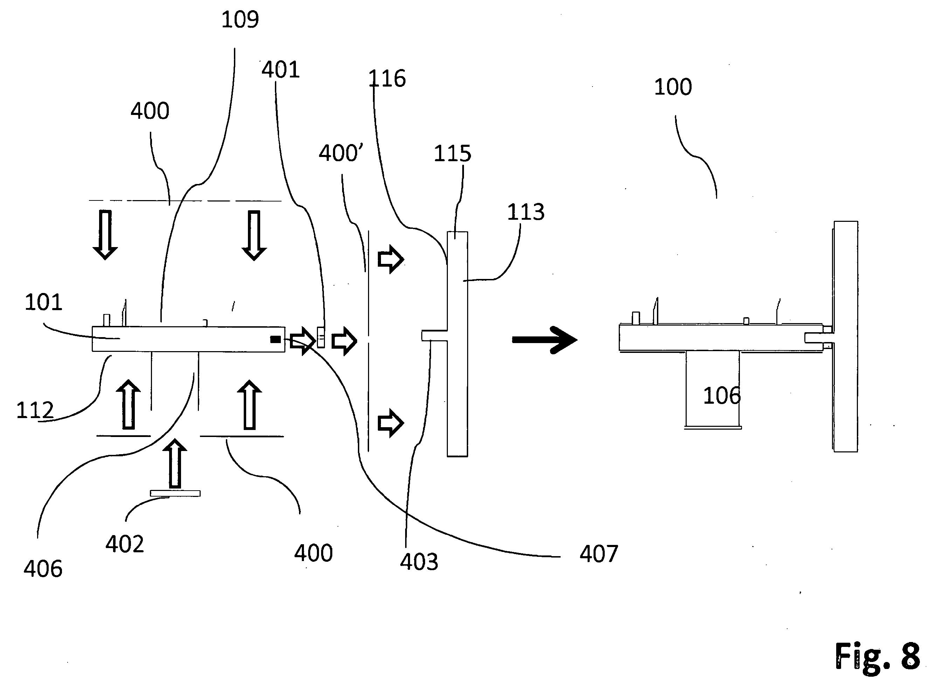

Selon un exemple du premier mode de réalisation du procédé, tel que représenté sur la figure 8 ladite plaque de support 101 comprend :
▪ deux faces opposées 109, 112 munies de rainures et de premiers moyens de connexion fluidiques connectés auxdites rainures ;
▪ une face perpendiculaire 407 auxdites deux faces opposées, ladite face perpendiculaire comprenant des seconds moyens de connexion fluidique en communication avec lesdites rainures.

Dans la première étape du procédé tel que décrit ci-dessus, un film, une feuille ou une plaque 400 sont assemblés sur chacune des faces opposées 109, 112 munies de rainures et de connexions fluidiques, de sorte à recouvrir hermétiquement lesdites rainures.

Préférablement, une portion cylindrique 406 ouverte s'étend perpendiculairement vers le bas de la plaque de support 101 à partir de sa surface inférieure 112. Préférablement, un tube plongeur 108 est moulé contre la paroi de la portion cylindrique ouverte 406. Dans une étape ultérieure au assemblage du film, feuille ou plaque 400 sur la face inférieure 112 de la plaque de support 101, une pièce circulaire 402 est soudée à la base de la portion cylindrique de sorte à former un réacteur 106.

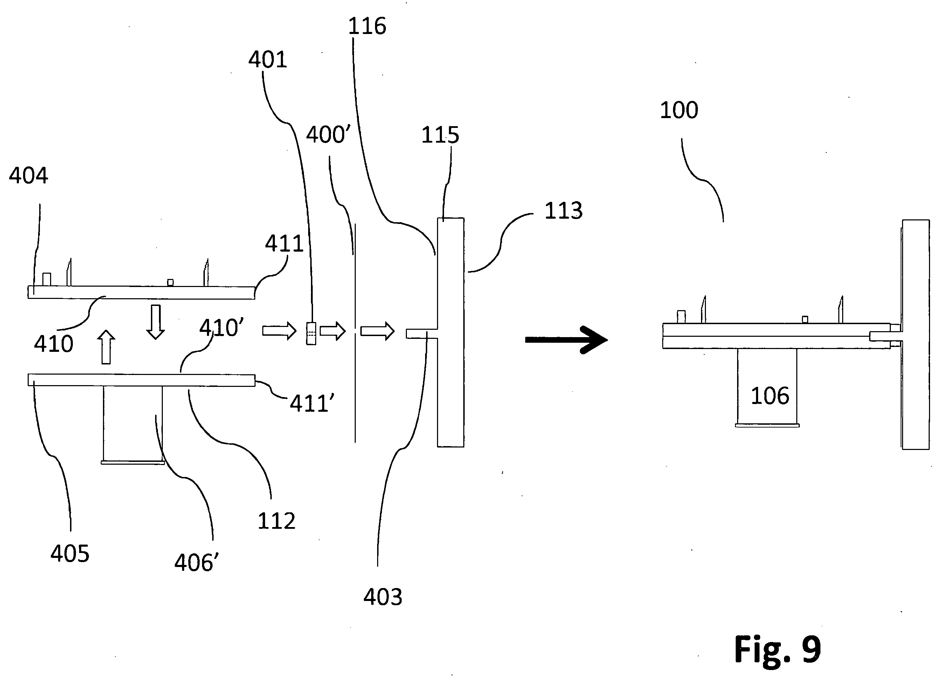

Selon un second mode de réalisation du procédé représenté sur la figure 9, le procédé de fabrication du module jetable est réalisé de la manière suivants :
Dans une première étape, une première plaque 404 comprenant :
   ▪ une première face 410 munie de rainures et de premiers moyens de connexion fluidique connectées auxdites rainures ;
   ▪ une face perpendiculaire 411 à ladite première, ladite face perpendiculaire comprenant des seconds moyens de connexion fluidique en communication avec lesdites rainures,
et une seconde plaque 405 comprenant :
   ▪ une première face 410' munie de rainures et de premiers moyens de connexion fluidique connectées auxdites rainures ;
   ▪ une face perpendiculaire 411' à ladite première, ladite face perpendiculaire comprenant des seconds moyens de connexion fluidique en communication avec lesdites rainures,
   sont gaufrées de sorte à former une plaque de support 101, ladite première face 410 de ladite première plaque 404 étant mise en contact avec ladite première face 410' de ladite seconde plaque 405, lesdites rainures de ladite première plaque 404 et de ladite seconde plaque 405 étant disposées de sorte à ne pas entrer en contact les unes avec les autres.

Préférablement, la, seconde plaque 405 comprend une portion cylindrique 406'ouverte s'étendant perpendiculairement vers le bas de la plaque 405 à partir de la surface inférieure 112. Préférablement, un tube plongeur 108 est moulé contre la paroi de la portion cylindrique ouverte 406'. Dans une étape préalable ou ultérieure à l'étape de gaufrage de la première plaque 404 avec la seconde plaque 405, une pièce circulaire 402 est soudée à la base de la portion cylindrique de sorte à former un réacteur 106.

Dans une seconde étape, un film, une feuille ou une plaque 400' est assemblée à une plaque d'interface 115 comprenant :
▪ une face 116 munie de rainures et ;
▪ des moyens de connexions fluidiques disposés de telle sorte à pouvoir se connecter auxdits seconds moyens de connexion fluidique de ladite plaque de support ;
de sorte à recouvrir hermétiquement lesdites rainures de ladite plaque d'interface 115.

Préférablement, l'assemblage des films, feuille ou plaque 400 sur ladite plaque d'interface 115 s'effectue au moyen d'un procédé de soudure thermique sans solvants, par exemple un procédé laser, un procédé de chauffage par ultrasons ou un procédé utilisant des lames chauffantes.

Le film, feuille ou plaque 400 assemblé sur la plaque d'interface 115 est soit préalablement troué, soit percé après collage de sorte à ce que chacun des moyens de connexion fluidiques soit désobstrué.

Dans une troisième étape, ladite plaque de support 101 est assemblée avec la plaque d'interface 115, de sorte à connecter lesdits moyens de connexion fluidique de plaque d'interface 115 avec lesdits seconds moyens de connexion fluidique de ladite plaque de support 101.

Préférablement, un joint 401 est inséré entre la plaque de support 101 et la plaque d'interface 115 lors de l'étape d'assemblage.

Préférablement, la plaque d'interface comprend un moyen de fixation 403 dans lequel vient se clipser la plaque de support 101 ou inversement. La plaque d'interface 115 comprend également des vannes disposées sur la face opposée 113 à la face 116 munie de rainures.

Préférablement, indépendamment du mode de réalisation du procédé de fabrication du module jetable, ladite plaque de support 101 et ladite plaque d'interface 115 sont en copolymère ethylène-norborène dont la température de transition vitreuse est supérieure à 150°C et lesdits films, feuilles ou plaques recouvrant lesdites rainures sont en polypropylène.Selon une forme d'exécution, la plaque de support 101 et la plaque d'interface 115 forment une pièce unitaire au lieu d'être deux pièces séparées et assemblées.

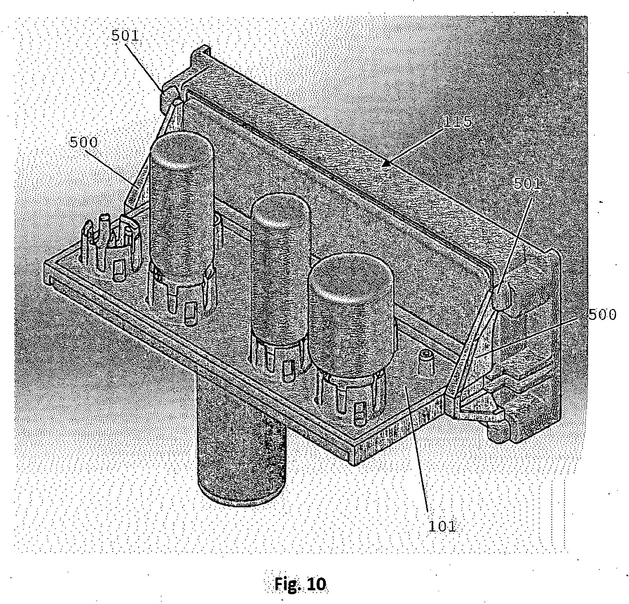

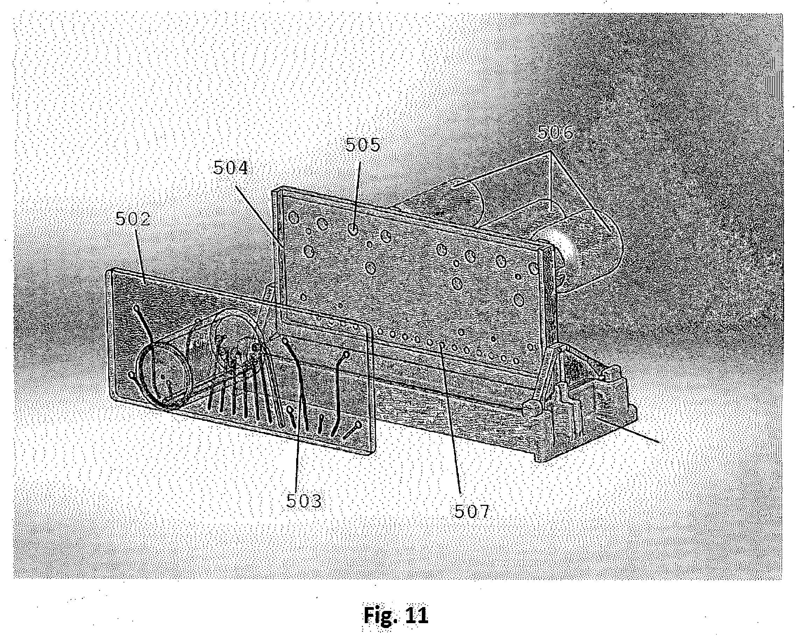

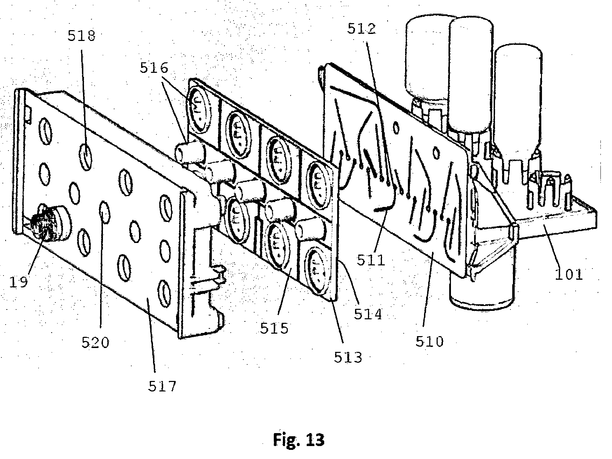

Selon une autre forme d'exécution, le module comprend une plaque de support 101 dans laquelle sont intégrées les moyens d'interface tels que les vannes V1-V8, les entrées de fluide E1-E2 et les sorties de fluides O1-O3. Cette forme d'exécution peut être réalisé en augmentant l'épaisseur de la plaque de support vis-à-vis les formes d'exécution décrites ci-dessus, de façon à loger les moyens d'interface dans un paroi de ladite plaque qui est perpendiculaire au plan de la plaque. Une autre possibilité est de prévoir une plaque de support pourvue d'une partie centrale comprenant les moyens rigides de connexion 114 à au moins un flacon de réactifs chimiques, et des parties situées latérales vis-à-vis de la partie centrale mais dans le même plan que la partie centrale, les parties latérales étant pourvue desdits moyens d'interface. Dans la forme d'exécution illustrée aux figures 10-13, la connexion entre la plaque de support 101 et la plaque d'interface 115 se fait par des ailes latérales 500 solidaires avec la plaque de support, et attachées à la plaque d'interface par des clips 501.

La plaque de support 101 est assemblée à partir d'une première plaque 502 pourvue de rainures 503 et une deuxième plaque 504 pourvue d'ouvertures 505 et 506 de connexion aux conduits formés par les rainures 503 après l'assemblage. Les ailes 500 sont solidaires avec la deuxième plaque 504. Une première groupe d'ouvertures 505 sont connectés aux flacons 506 montés sur la plaque de support. Une deuxième groupe d'ouvertures 507 est connectée par l'intérieur de la partie 504 à des ouvertures 508 à la face perpendiculaire 509 de la deuxième plaque 504. C'est donc une forme d'exécution similaire à celle montrée à la figure 9, sauf que les rainures 503 se trouvent tous dans une des deux parties (404 et 405 à la figure 9).

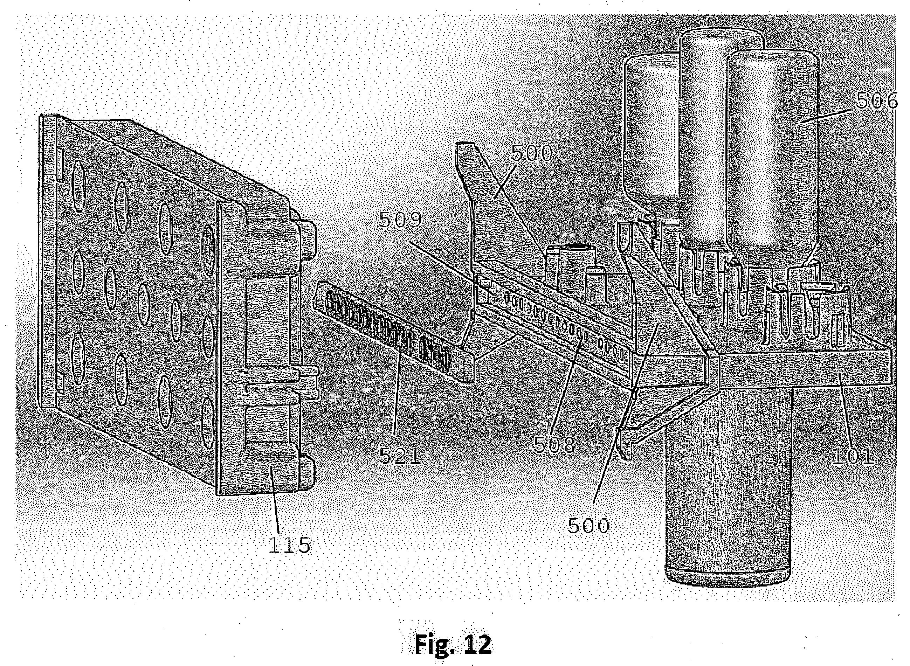

La plaque d'interface 115 est formée par l'assemblage de trois parties :
- une plaque 510 pourvue de rainures 511 et d'ouvertures 512 configurées pour se connecter aux ouvertures 508 de la plaque de support 101,
- une plaque 513 comprenant une face plane 514 qui va se mettre contre les rainures 511 pour créer des caneaux, et une face 515 comprenant des moyens de connexion 516 pour des vannes et des entrées ou sorties de fluides, et
- une troisième plaque 517 comprenant des ouvertures 518 pour loger des vannes 519 de différentes types, ainsi que des ouvertures 520 pour des entrées ou sorties de fluides. Des moyens d'étanchéité 521 sont insérés entre les deux plaques 101 et 115 comme montré à la figure 12.

## Revendications

1. Module jetable (100) pour utilisation dans un dispositif (300) de synthèse de produits radiopharmaceutiques au départ de réactifs chimiques, le dit module jetable (100) comprenant :
- une plaque de support (101) comprenant des moyens rigides de connexion (114) à au moins un flacon de réactifs chimiques (102, 103, 104, 105) en solution dans un solvant, et un réacteur (106);
- des moyens d'interface (115) avec un module fixe dudit dispositif de synthèse (300), en contact avec ou intégrés dans ladite plaque de support (101), lesdits moyens d'interface comprenant au moins une vanne (V1-V8) et/ou au moins une entrée de fluide (E1, E2) et/ou au moins une sortie de fluides (O1, 02, 03);
- au moins un conduit (1-20) connecté auxdites au moins une vanne (V1-V8) ou auxdites au moins une entrée de fluide (E1, E2) ou auxdites au moins une sortie de fluide (O1, 02, 03),
**caractérisé en ce que** au moins un desdits conduits (1-20) est intégré dans le corps du module jetable (100).

2. Module jetable (100) selon la revendication 1, dans lequel les moyens d'interface se présentent comme une plaque d'interface (115) comprenant lesdites au moins une vanne (V1-V8), lesdites au moins une entrée de fluide (E1, E2) et lesdites au moins une sortie de fluides (O1, 02, 03) et en contact avec ladite plaque de support (101),
**caractérisé en ce que** au moins un desdits conduits (1-20) est intégré dans ladite plaque de support (101) et/ou dans ladite plaque d'interface (115).

3. Module jetable selon la revendication 2, dans lequel la totalité desdits conduits (1-20) sont intégrés dans ladite plaque de support (101) et/ou dans ladite plaque d'interface (115).

4. Module jetable selon la revendication 2 ou 3, **caractérisé en ce que** la connexion entre la plaque de support (101) et la plaque d'interface (115) est effectuée par des ailes latérales (500) solidaires avec la plaque de support (101), et attachées à la plaque d'interface. (115) par des clips (501).

5. Module jetable selon l'une quelconque des revendications précédentes dans lequel lesdits des moyens -rigides de connexion (114) se présentent sous la forme d'au moins une aiguille.

6. Module jetable selon l'une quelconque des revendications précédentes dans lequel lesdits moyens rigides de connexion sont moulé avec ladite plaque de support, ou ladite plaque de support est surmoulée sur au moins une aiguille métallique.

7. Module jetable selon l'une quelconque des revendications précédentes **caractérisé en ce qu'**il comprend ledit au moins un flacon de réactifs chimiques (102, 103, 104, 105) en solution dans un solvant.

8. Module jetable selon l'une quelconque des revendications précédentes **caractérisé en ce qu'**il comprend :
- des conduits (1, 2, 3, 4, 5, 8, 9, 11, 12, 15, 16) arrangés de sorte à permettre le transfert desdits réactifs chimiques vers ledit réacteur ;
- un conduit (6) arrangé de sorte à permettre l'introduction d'un flux de gaz dans ledit réacteur
- un conduit (7) arrangé de sorte à faire le vide dans le réacteur ;
- un conduit (10) arrangé pour permettre l'évacuation du produit obtenu dans ledit réacteur.

9. Module jetable selon l'une quelconque des revendications précédentes **caractérisé en ce que** ladite plaque de support (101) comprend des moyens de fixation (107) pour ledit au moins un flacon.

10. Module jetable selon l'une quelconque des revendications précédentes **caractérisé en ce que** ledit réacteur (106) est en un matériau plastique inerte chimiquement en présence de solutions rencontrées dans la synthèse de produits radiopharmaceutiques et thermorésistant à des températures supérieures à 150°C.

11. Module jetable selon la revendication 10 **caractérisé en ce que** ledit matériau plastique est un copolymère ethylène-norborène dont la température de transition vitreuse est supérieure à 150°C.

12. Module jetable selon l'une quelconque des revendications précédentes **caractérisé en ce qu'**il est obtenu par un procédé selon l'une quelconque des revendications 13 à 17.

13. Procédé de fabrication d'un module jetable pour utilisation dans un dispositif de synthèse de produits radiopharmaceutiques, ledit procédé comprenant une étape de assemblage d'un film, d'une feuille ou d'une plaque (400,404,405,504,400',513) sur une plaque (101,405,404,502,115,510) de module jetable substantiellement plane et munie de rainures, de sorte à recouvrir hermétiquement lesdites rainures pour former des conduits ou des parties de conduits aptes à transférer des réactifs chimiques, des gaz ou des produits.

14. Procédé selon la revendication 13 **caractérisé en ce qu'**il comprend les étapes suivantes :
i) assemblage d'un film, d'une feuille ou d'une plaque (400) sur une plaque de support (101) comprenant .
• une première face (109, 112) munie de rainures et de premiers moyens de connexion fluidiques ( 114, 114', 110, 110', 111, 111')connectés auxdites rainures ;
• une face perpendiculaire (407) à ladite première face (109, 112), ladite face perpendiculaire comprenant des seconds moyens de connexion fluidique en communication avec lesdites rainures,
de sorte à recouvrir hermétiquement lesdites rainures ;
ii) assemblage d'un film, d'une feuille ou d'une plaque (400') sur une plaque d'interface (115) comprenant :
• une face (116) munie de rainures et ;
• des moyens de connexions fluidiques disposés de telle sorte à pouvoir se connecter auxdits seconds moyens de connexion fluidique de ladite plaque de support ;
de sorte à recouvrir lesdites rainures de ladite plaque d'interface (115) ;
iii) assemblage hermétique de ladite plaque de support (101) avec ladite plaque d'interface (115), de sorte à connecter lesdits moyens de connexion fluidique de ladite plaque d'interface (115) avec lesdits seconds moyens de connexion fluidique de ladite plaque de support (101).

15. Procédé selon la revendication 14 **caractérisé en ce que** ladite étape d'assemblage hermétique s'effectue en insérant un joint (401) entre ladite plaque de support (101) et ladite plaque d'interface (115).

16. Procédé selon la revendication 13 **caractérisé en ce qu'**il comprend les étapes suivantes :
i) gaufrage d'une première plaque (404) comprenant :
• une première face (410) munie de rainures et de premiers moyens de connexion fluidique (114, 110, 110', 111, 111') connectées auxdites rainures ;
• une face perpendiculaire (411) à ladite première face (410), ladite face perpendiculaire (411) comprenant des seconds moyens de connexion fluidique en communication avec lesdites rainures,
et d'une seconde plaque (405) comprenant :
• une première face (410') munie de rainures et de premiers moyens de connexion fluidique (114') connectées auxdites rainures ;
• une face perpendiculaire (411') à ladite première face (410'), ladite face perpendiculaire (411') comprenant des seconds moyens de connexion fluidique en communication avec lesdites rainures,
de sorte à former une plaque de support (101), ladite première face (410) de ladite première plaque (404) étant mise en contact avec ladite première face (410') de ladite seconde plaque (405), lesdites rainures de ladite première plaque et de ladite seconde plaque étant disposées de sorte à ne pas entrer en contact les unes avec les autres ;
ii) collage d'un film, d'une feuille ou d'une plaque (400') sur une plaque d'interface (115) comprenant :
• une face (116) munie de rainures et ;
• des moyens de connexions fluidiques disposés de telle sorte à pouvoir se connecter auxdits seconds moyens de connexion fluidique de ladite plaque de support ;
de sorte à recouvrir lesdites rainures de ladite plaque d'interface (115) ;
iii) assemblage hermétique de ladite plaque de support (101) avec ladite plaque d'interface (115), de sorte à connecter lesdits moyens de connexion fluidique de ladite plaque d'interface (115) avec lesdits seconds moyens de connexion fluidique de ladite plaque de support (101).

17. Procédé selon les revendications 13 à 16 **caractérisé en ce que** ladite plaque de support (101) et/ou ladite plaque d'interface (115) sont en copolymère ethylène-norborène dont la température de transition vitreuse est supérieure à 150°C et **en ce que** lesdits films, feuilles ou plaques recouvrant lesdites rainures sont en polypropylène.

18. Dispositif de synthèse (300) de produits radiopharmaceutiques **caractérisé en ce qu'**il comprend un module jetable (100) selon l'une quelconque des revendications 1 à 12.

## Patentansprüche

1. Einwegmodul (100) zur Verwendung in einer Synthesevorrichtung (300) radiopharmazeutischer Produkte aus chemischen Reagenzien, wobei das Einwegmodul (100) umfasst:
- eine Grundplatte (101), die starre Verbindungsmittel (114) mit mindestens einem Flakon chemischer Reagenzien (102, 103, 104, 105) gelöst in einem Lösungsmittel und einen Reaktor (106) umfasst,
- Schnittstellenmittel (115) mit einem festen Modul der Synthesevorrichtung (300) im Kontakt mit oder integriert in die Grundplatte (101), wobei die Schnittstellenmittel mindestens ein Ventil (V1-V8) und/oder mindestens einen Fluideingang (E1, E2) und/oder mindestens einen Fluidausgang (01, 02, 03) umfassen,
- mindestens eine Leitung (1-20), die mit dem mindestens einen Ventil (V1-V8) oder mit dem mindestens einen Fluideingang (E1, E2) oder mit dem mindestens einen Fluidausgang (01, 02, 03) verbunden ist,
**dadurch gekennzeichnet, dass** mindestens eine der Leitungen (1-20) in den Körper des Einwegmoduls (100) integriert ist.

2. Einwegmodul (100) nach Anspruch 1, wobei sich die Schnittstellenmittel in Form einer Schnittstellenplatte (115), welche das mindestens eine Ventil (V1-V8), den mindestens einen Fluideingang (E1, E2) und den mindestens einen Fluidausgang (01, 02, 03) umfasst und im Kontakt mit der Grundplatte (101) präsentieren,
**dadurch gekennzeichnet, dass** mindestens eine der Leitungen (1-20) in die Grundplatte (101) und/oder in die Schnittstellenplatte (115) integriert ist.

3. Einwegmodul nach Anspruch 2, wobei die Gesamtheit der Leitungen (1-20) in die Grundplatte (101) und/oder in die Schnittstellenplatte (115) integriert ist.

4. Einwegmodul nach Anspruch 2 oder 3, **dadurch gekennzeichnet, dass** die Verbindung zwischen der Grundplatte (101) und der Schnittstellenplatte (115) durch Seitenflügel (500) erfolgt, die mit der Grundplatte (101) fest verbunden und an der Schnittstellenplatte (115) anhand von Clipsen (501) befestigt sind.

5. Einwegmodul nach einem der vorangehenden Ansprüche, wobei die starren Verbindungsmittel (114) die Form von mindestens einer Nadel haben.

6. Einwegmodul nach einem der vorangehenden Ansprüche, wobei die starren Verbindungsmittel mit der Grundplatte geformt sind oder die Grundplatte über mindestens eine Metallnadel geformt ist.

7. Einwegmodul nach einem der vorangehenden Ansprüche, **dadurch gekennzeichnet, dass** es den mindestens einen Flakon chemischer Reagenzien (102, 103, 104, 105) gelöst in einem Lösungsmittel umfasst.

8. Einwegmodul nach einem der vorangehenden Ansprüche, **dadurch gekennzeichnet, dass** es umfasst:
- Leitungen (1, 2, 3, 4, 5, 8, 9, 11, 12, 15, 16), die derart arrangiert sind, dass der Transfer der chemischen Reagenzien in den Reaktor möglich ist,
- eine Leitung (6), die derart arrangiert ist, dass das Einleiten eines Gasstroms in den Reaktor möglich ist,
- eine Leitung (7), die zur Herstellung des Vakuums im Reaktor arrangiert ist,
- eine Leitung (10), die zur Ausleitung des in dem Reaktor erhaltenen Produkts arrangiert ist.

9. Einwegmodul nach einem der vorangehenden Ansprüche, **dadurch gekennzeichnet, dass** die Grundplatte (101) Befestigungsmittel (107) für den mindestens einen Flakon umfasst.

10. Einwegmodul nach einem der vorangehenden Ansprüche, **dadurch gekennzeichnet, dass** der Reaktor (106) aus einem in Gegenwart von Lösungen, die in der Synthese radiopharmazeutischer Produkte angetroffen werden, chemisch inerten und gegenüber Temperaturen über 150 °C thermisch resistenten Kunststoffmaterial ist.

11. Einwegmodul nach Anspruch 10, **dadurch gekennzeichnet, dass** das Kunststoffmaterial ein Ethylen-Norboren-Copolymer ist, dessen Glasübergangstemperatur über 150 °C ist.

12. Einwegmodul nach einem der vorangehenden Ansprüche, **dadurch gekennzeichnet, dass** es nach einem Verfahren nach einem der Ansprüche 13 bis 17 gewonnen wird.

13. Herstellungsverfahren eines Einwegmoduls für die Verwendung in einer Synthesevorrichtung radiopharmazeutischer Produkte, wobei das Verfahren einen Verbindungsschritt einer Folie, eines Bogens oder einer Platte (400, 404, 405, 504, 400', 513) auf einer substantiell ebenen und mit Rillen ausgestatteten Einwegmodulplatte (101, 405, 404, 502, 115, 510) umfasst, um die Rillen hermetisch abzudecken, um Leitungen oder Leitungsabschnitte zu bilden, die imstande sind, chemische Reagenzien, Gase oder Produkte zu übertragen.

14. Verfahren nach Anspruch 13, **dadurch gekennzeichnet, dass** es die folgenden Schritte umfasst:
i) Verbinden einer Folie, eines Bogens oder einer Platte (400) auf einer Grundplatte (101), umfassend:
• eine erste Fläche (109, 112), die mit Rillen und ersten fluidischen Verbindungsmitteln (114, 114', 110, 110', 111, 111') ausgestattet ist, die mit den Rillen verbunden sind,
• eine zur ersten Fläche (109, 112) senkrechte Fläche (407), wobei die senkrechte Fläche zweite fluidische Verbindungsmittel in Kommunikation mit den Rillen umfasst,
um die Rillen hermetisch abzudecken,
ii) Verbinden einer Folie, eines Bogens oder einer Platte (400') auf einer Schnittstellenplatte (115), umfassend:
• eine mit Rillen ausgestattete Fläche (116),
• fluidische Verbindungsmittel, die derart angeordnet sind, dass sie sich mit den zweiten fluidischen Verbindungsmitteln der Grundplatte verbinden können,
um die Rillen der Schnittstellenplatte (115) abzudecken,
iii) hermetische Verbindung der Grundplatte (101) mit der Schnittstellenplatte (115), um die fluidischen Verbindungsmittel der Schnittstellenplatte (115) mit den zweiten fluidischen Verbindungsmitteln der Grundplatte (101) zu verbinden.

15. Verfahren nach Anspruch 14, **dadurch gekennzeichnet, dass** der Schritt der hermetischen Verbindung durch Einsetzen einer Dichtung (401) zwischen der Grundplatte (101) und der Schnittstellenplatte (115) erfolgt.

16. Verfahren nach Anspruch 13, **dadurch gekennzeichnet, dass** es die folgenden Schritte umfasst:
i) Prägen einer ersten Platte (404), umfassend:
• eine erste Fläche (410), die mit Rillen und ersten fluidischen Verbindungsmitteln (114, 114', 110, 110', 111, 111') ausgestattet ist, die mit den Rillen verbunden sind,
• eine zur ersten Fläche (410) senkrechte Fläche (411), wobei die senkrechte Fläche (411) zweite fluidische Verbindungsmittel in Kommunikation mit den Rillen umfasst,
und einer zweite Platte (405), umfassend:
• eine erste Fläche (410'), die mit Rillen und ersten fluidischen Verbindungsmitteln (114') ausgestattet ist, die mit den Rillen verbunden sind,
• eine zur ersten Fläche (410') senkrechte Fläche (411'), wobei die senkrechte Fläche (411') zweite fluidische Verbindungsmittel in Kommunikation mit den Rillen umfasst,
um eine Grundplatte (101) zu bilden, wobei die erste Fläche (410) der ersten Platte (404) mit der ersten Fläche (410') der zweiten Platte (405) in Kontakt versetzt ist, wobei die Rillen der ersten Platte und der zweiten Platte derart angeordnet sind, dass sie nicht miteinander in Kontakt treten,
ii) Kleben einer Folie, eines Bogens oder einer Platte (400') auf eine Schnittstellenplatte (115), umfassend:
• eine mit Rillen ausgestattete Fläche (116), und
• fluidische Verbindungsmittel, die derart angeordnet sind, dass sie sich mit den zweiten fluidischen Verbindungsmitteln der Grundplatte verbinden können,
um die Rillen der Schnittstellenplatte (115) abzudecken,
iii) hermetische Verbindung der Grundplatte (101) mit der Schnittstellenplatte (115), um die fluidischen Verbindungsmittel der Schnittstellenplatte (115) mit den zweiten fluidischen Verbindungsmitteln der Grundplatte (101) zu verbinden.

17. Verfahren nach den Ansprüchen 13 bis 16, **dadurch gekennzeichnet, dass** die Grundplatte (101) und/oder die Schnittstellenplatte (115) aus Ethylen-Norboren-Copolymer sind, dessen Glasübergangstemperatur über 150 °C ist, und dass die Folien, Bögen oder Platten, die die Rillen bedecken, aus Polypropylen sind.

18. Synthesevorrichtung (300) radiopharmazeutischer Produkte, **dadurch gekennzeichnet, dass** sie ein Einwegmodul (100) nach einem der Ansprüche 1 bis 12 umfasst.

## Claims

1. A disposable module (100) for use in a device (300) for synthesis of radiopharmaceutical products starting with chemical reagents, said disposable module (100) comprising:
- a supporting plate (101) comprising rigid connection means (114) to at least one flask of chemical reagents (102, 103, 104, 105) in solution in a solvent, and a reactor (106);
- interface means (115) with a fixed module of said synthesis device (300), in contact with or integrated into said supporting plate (101), said interface means comprising at least one valve (V1-V8) and/or at least one fluid inlet (E1, E2) and/or at least one fluid outlet (O1, 02, 03);
- at least one conduit (1-20) connected to said at least one valve (V1-V8) or to said at least one fluid inlet (E1, E2) or to said at least one fluid outlet (O1, 02, O3),
**characterized in that** at least one of said conduits (1-20) is integrated into the body of the disposable module (100).

2. The disposable module (100) according to claim 1, wherein the interface means appear as an interface plate (115) comprising said at least one valve (V1-V8), said at least one fluid inlet (E1, E2) and said at least one fluid outlet (O1, 02, 03) and in contact with said supporting plate (101),
**characterized in that** at least one of said conduits (1-20) is integrated into said supporting plate (101) and/or into said interface plate (115).

3. The disposable module according to claim 2, wherein the totality of said conduits (1-20) are integrated into said supporting plate (101) and/or into said interface plate (115).

4. The disposable module according to claim 2 or 3, **characterized in that** the connection between the supporting plate (101) and the interface plate (115) is carried out by side wings (500) secured with the supporting plate (101), and attached to the interface plate (115) with clips (501).

5. The disposable module according to any of the preceding claims, wherein said rigid connection means (114) appear in the form of at least one needle.

6. The disposable module according to any of the preceding claims, wherein said rigid connection means are molded with said supporting plate, or said supporting plate is overmolded over at least one metal needle.

7. The disposable module according to any of the preceding claims, **characterized in that** it comprises said at least one flask of chemical reagents (102, 103, 104, 105) in solution in a solvent.

8. The disposable module according to any of the preceding claims, **characterized in that** it comprises:
- conduits (1, 2, 3, 4, 5, 8, 9, 11, 12, 15, 16) arranged so as to allow transfer of said chemical reagents to said reactor;
- a conduit (6) arranged so as to allow the introduction of a gas flow into said reactor;
- a conduit (7) arranged so as to apply vacuum in the reactor;
- a conduit (10) arranged for allowing the discharge of the product obtained in said reactor.

9. The disposable module according to any of preceding claims, **characterized in that** said supporting plate (101) comprises attachment means (107) for said at least one flask.

10. The disposable module according to any of the preceding claims, **characterized in that** said reactor (106) is in a chemically inert plastic material in the presence of solutions encountered in the synthesis of radiopharmaceutical products and thermoresistant to temperatures above 150°C.

11. The disposable module according to claim 10, **characterized in that** said plastic material is an ethylene-norbornene copolymer, the glassy transition temperature of which is above 150°C.

12. The disposable module according to any of the preceding claims, **characterized in that** it is obtained by a method according to any of claims 13 to 17.

13. A method for manufacturing a disposable module for use in a device for synthesis of radiopharmaceutical products, said method comprising a step for assembling a film, a sheet or a plate (400, 404, 405, 504, 400, 513) on a substantially planar disposable module plate (101, 405, 404, 502, 115, 510) and provided with grooves, so as to hermetically cover said grooves in order to form conduits or conduit portions able to transfer chemical reagents, gases or products.

14. The method according to claim 13, **characterized in that** it comprises the following steps:
i) assembling a film, a sheet or a plate (400) on a supporting plate (101) comprising:
• a first face (109, 112) provided with grooves and with first fluidic connection means (114, 114', 110, 110', 111, 111') connected to said grooves;
• a face (407) perpendicular to said first face (109,112), said perpendicular face comprising second fluidic connection means in communication with said grooves,
so as to hermetically cover said grooves;
ii) assembling a film, a sheet or a plate (400') on an interface plate (115) comprising:
• a face (116) provided with grooves and;
• fluidic connection means positioned so as to be able to connect to said second fluidic connection means of said supporting plate;
so as to cover said grooves of said interface plate (115) ;
iii) hermetically assembling said supporting plate (101) with said interface plate (115), so as to connect said fluidic connection means of said interface plate (115) with said second fluidic connection means of said supporting plate (101).

15. The method according to claim 14, **characterized in that** said hermetic assembling step is carried out by inserting a gasket (401) between said supporting plate (101) and said interface plate (115).

16. The method according to claim 13, **characterized in that** it comprises the following steps:
i) Embossing a first plate (404) comprising:
• a first face (410) provided with grooves and with first fluidic connection means (114, 110, 110', 111, 111') connected to said grooves;
• a face (411) perpendicular to said first face (410), said perpendicular face (411) comprising second fluidic connection means in communication with said grooves,
and a second plate (405) comprising:
• a first face (410') provided with grooves and with first fluidic connection means (114') connected to said grooves;
• a face (411') perpendicular to said first face (410'), said perpendicular face (411') comprising second fluidic connection means in communication with said grooves,
so as to form a supporting plate (101), said first face (410) of said first plate (404) being put into contact with said first face (410') of said second plate (405), said grooves of said first plate and of said second plate being positioned so as to not come into contact with each other;
ii) adhesively bonding a film, a sheet or a plate (400') on an interface plate (115) comprising:
• a face (116) provided with grooves and;
• fluidic connection means positioned so as to be able to connect to said second fluidic connection means of said supporting plate;
so as to cover said grooves of said interface plate (115) ;
iii) hermetically assembling said supporting plate (101) with said interface plate (115), so as to connect said fluidic connection means of said interface plate (115) with said second fluidic connection means of said supporting plate (101).

17. The method according to claims 13 to 16 **characterized in that** said supporting plate (101) and/or said interface plate (115) are in ethylene-norbornene copolymer, the glassy transition temperature of which is above 150°C and **in that** said films, sheets or plates covering said grooves are in polypropylene.

18. A device (300) for synthesizing radiopharmaceutical products, **characterized in that** it comprises a disposable module (100) according to any of claims 1 to 12.
